# EUROPEAN PATENT SPECIFICATION

(11) **EP 0 261 463 B1**
(45) Date of publication and mention of the grant of the patent: **17.05.1995**
(21) Application number: 87112830.2
(22) Date of filing: 02.09.1987
(51) Int. Cl.: G09G 1/00, G06F 3/153

(54) **Display control apparatus**
Anzeigesteuergerät
Dispositif de commande d'affichage

(30) Priority: 24.09.1986 JP 223549/86
(43) Date of publication of application: 30.03.1988
(73) Proprietor: HITACHI, LTD., Chiyoda-ku, Tokyo 101 (JP)
(72) Inventor: Yamazaki, Hideki, Kodaira-shi Tokyo (JP); Takeda, Hiroshi, Kodaira-shi Tokyo (JP)
(74) Representative: Strehl Schübel-Hopf Groening & Partner

(56) References cited:
- EP-A- 0 147 542
- EP-A- 0 158 785
- EP-A- 0 172 312
- EP-A- 0 247 827
- WO-A-87/00329
- US-A- 4 559 533

## Description

### BACKGROUND OF THE INVENTION

This invention relates to a display control technique and a technique which is particularly effective when applied to a multi-window control system such as a technique which is effective when utilized for a display control apparatus such as a graphic controller, for example.

In conventional graphic display, systems, a software window system and a hardware window system have been proposed as a multi-window control system for displaying a plurality of windows on a display surface.

Among them, the hardware window system is accomplished by furnishing a display controller LSI with a multi-window control function. In the software window system, on the other hand, a software executes a function called "bit block transfer" which transfers data of a rectangular region inside a frame buffer for the purpose of multi-window display. (As to multi-window control, refer to "Nikkei Electronics", published by Nikkei McGraw Hill Co., July 14, 1986, No. 399, pp. 115 - 132).

In the conventional multi-window control systems, the hardware system has a higher display speed but its display freedom is lower because the priority sequence of windows is fixed. On the other hand, the software system offers a high freedom of display surface control such as a greater number of windows but involves the problem that the display speed is extremely low for the following reason. In the software system, data that constitute a base picture and a window picture are stored in predetermined areas of a bit map memory, respectively, and then the display surface area must be rewritten through data block transfer by transferring the data constituting the window picture to the base surface area and superposing them together.

EP-A-0 158 785 discloses a system comprising a multi-page memory in which the number of pages equals the number of possible windows on the display screen. Further, the system comprises two auxiliary memories, one memory being accessed by the X-coordinate of the pixel presently being scanned and containing the projections of the X-coordinates of the defined windows, the other memory being accessed by the Y-coordinate of the pixel presently being scanned and containing the projections of the Y-coordinates of the defined windows. In dependence upon the outputs of the memories, a group of logical ports determines to which of the windows the presently scanned pixel belongs. A priority encoder then determines which of these selected windows is visible at the position of the scanned pixel, and outputs the number of this window, this number enabling (together with the X- and Y-coordinates of the currently scanned window) access to one particular page of the currently addressed memory location. Further, the data stored in the auxiliary memories can be updated to re-define the form of the windows.

However, there is no disclosure of a plurality of registers each for programmably associating a display priority with one of the windows (pages). The disclosure merely indicates that the priorities of the encoder correspond with the superposition of the windows.

US-A-4 559 533 discloses a graphic system having a viewport map memory comprising a plurality of words each of which corresponds to one of 300 blocks on a screen. A priority number is set into each word of the viewport map memory in order to determine the display of the corresponding block on the screen. Therefore, in order to change the display priority of a window constructed by a plurality of blocks, it is necessary to change the contents of all of the plurality of words corresponding to those blocks.

### SUMMARY OF THE INVENTION

It is therefore an object of the present invention to provide a multi-window control technique having high a freedom of display picture control and moreover capable of high speed display.

The present invention is defined by claim 1.

The features of the present invention will become more apparent from the following description of a preferred embodiment to be taken in conjunction with the accompanying drawings.

The following will illustrate a typical example of the invention disclosed herein.

Namely, there are disposed window management circuits which include a plurality of area setting registers for individually setting a plurality of window display areas on a display surface and which judge sequentially for each of the windows whether or not the display position on the display surface is contained in the area designated by the registers, and a window display priority designation circuit which includes a plurality of priority setting registers for setting a display priority of each window and which judges the window having higher priority among those windows which are judged as containing the display position described above on the basis of the content of the priority setting registers and the result of judgement of the window management circuits. As to the output of the display address corresponding to the window which is judged as having higher priority, address calculation is made for each of the windows which are judged as having the display position on the basis of result of judgement of the window management circuits, and only the result of judgement among the results of judgement which is judged as having higher priority by the window display priority designation circuit is selectively outputted to a frame buffer. Furthermore, calculation of the display address corresponding to the window which is judged as having higher priority by the window display priority designation circuit is executed selectively and the address as the result of calculation can be supplied, too, to the frame buffer.

According to the means described above, the change of the display position and size of the window and the change of the display priority sequence at an overlap portion can be made by merely changing the set content of the area setting register and the priority setting registers, so that freedom of the display surface can be increased and multi-window control can be made at a higher speed.

### BRIEF DESCRIPTION OF THE DRAWINGS

Fig. 1 is a block diagram of a display control apparatus in accordance with one embodiment of the present invention;
Fig. 2 is a block diagram showing an example of a window display priority designation circuit;
Fig. 3 is a timing chart useful for explaining the operation of multi-window display control in the display control apparatus shown in Fig. 1;
Figs. 4A and 4B show examples of the decoder, the control signal/status signal generation logic that are shown in Fig. 2; and
Fig. 5 shows one example of the address arithmetic unit shown in Fig. 1.

### DESCRIPTION OF THE PREFERRED EMBODIMENT

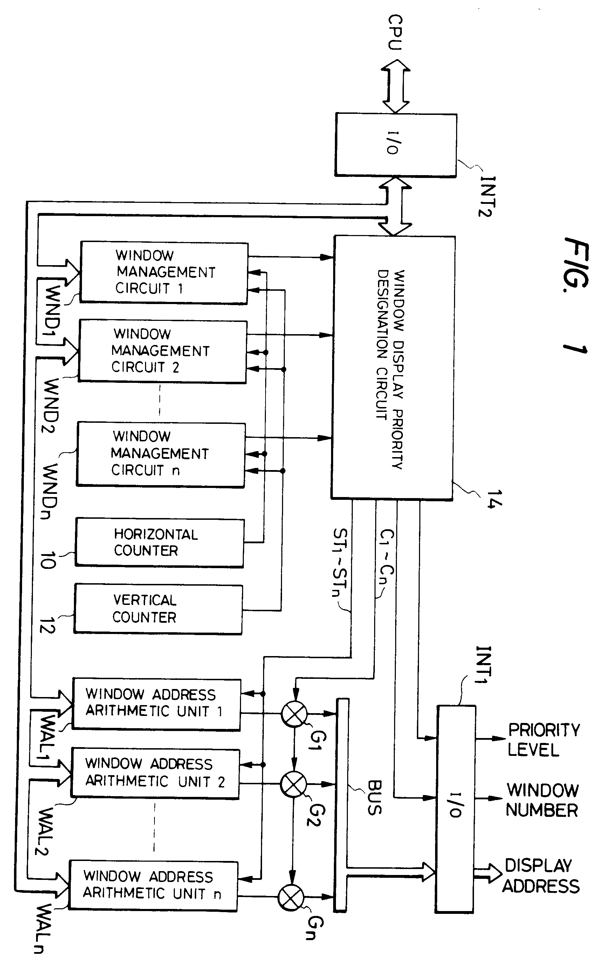

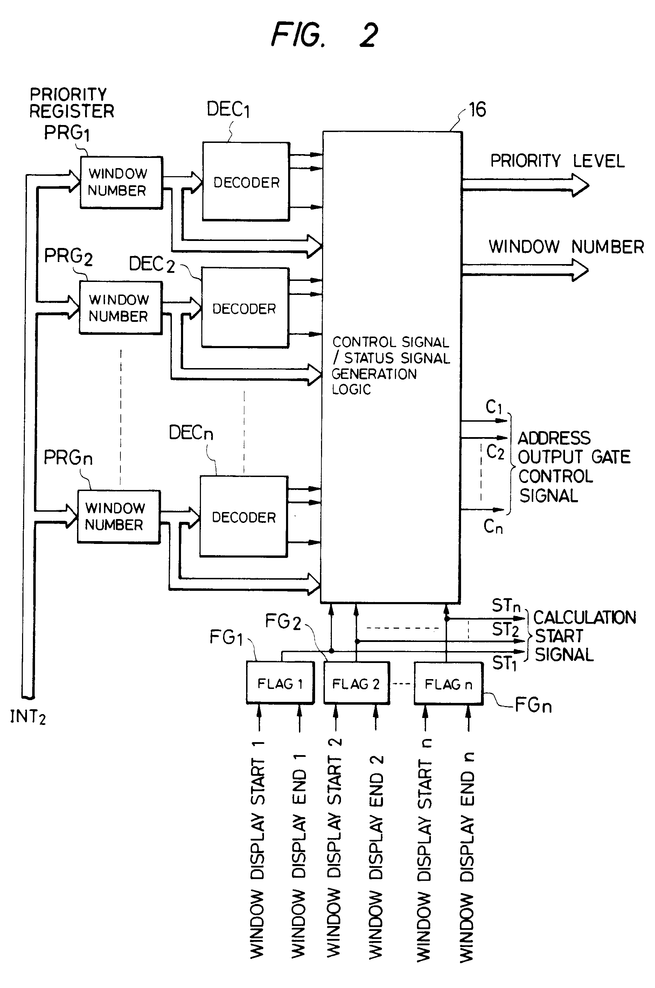

In the display control apparatus shown in Fig. 1, n window management circuits WND₁ ∼ WND are provided in order to display and control n windows on the display surface, although not particularly limitative. Each window management circuit WND₁ ∼ WNDₙ is equipped with a start address register for designating the start position on the picture surface in a horizontal direction, an end address register for designating the end position in the horizontal direction, a start address register for designating the start position in a vertical direction, an end address register for designating the end position in the vertical direction and an address comparison comparator for sequentially discriminating whether or not the display position on the display surface is contained in the window display area designated by the respective register, in order to set arbitrarily the window display area on the display surface.

Signals from a horizontal counter 10 representing the display position in the horizontal direction on the display surface and a vertical counter 12 for representing the display position in the vertical direction are applied to each window management circuit WND₁ ∼ WNDₙ. The comparator of each window management circuit compares the value of the address register with the count value supplied and when the display position falls within its own window and when the display position comes out from its own window, it outputs coincidence detection signals, respectively.

The detection signal outputted from each window management circuit WND₁ ∼ WNDₙ is supplied to a window display priority designation circuit 14 for judging the priority of which window is the highest when a plurality of windows overlap, that is, for judging the display data of which window is to be displayed. Upon receiving the detection signal for display start from each window management circuit WND₁ ∼ WNDₙ, each window management circuit WND₁ ∼ WNDₙ outputs a calculation start signal STi to an address arithmetic unit WALi (i = 1, 2, ..., n) corresponding to the window. A priority designation register for setting the priority of each window is disposed inside the window display priority designation circuit 14, and window control is carried out in accordance with the priority that is set in advance to this register by CPU.

In other words, even when the display start signals are applied simultaneously from a plurality of window management circuits, the window display priority designation circuit 14 outputs a control signal Ci such that it opens the output gate Gi of the address arithmetic unit WALi corresponding to the window having the highest priority among these windows. Then, the address that is outputted onto an internal bus BUS through the output gate Gi thus opened is outputted outside as the display address for making read access to the data of a predetermined window through an I/O interface circuit INT₁, and is supplied to a frame buffer (not shown), or the like.

Although not particularly limitative, it is possible in this embodiment to output outside a signal representing the level of priority generated by the window display priority designation circuit 14 and a window number representing to which window the display address which is being outputted belongs, together with the display address described above. Accordingly, the multi-window control system including a plurality of display control apparatuses can easily control and let an external circuit (not shown) adopt the output of which display control apparatuses, on the basis of the priority level outputted from each display control apparatus and the window number.

The following methods may be used as a method of setting priority by the priority register in the window display priority designation circuit 14. The first method prepares in advance the same number of registers as the number (n) of the windows, putting in advance the priority sequence to these registers and setting the window number into each register so as to provide each window with priority. The second method disposes registers each of which corresponds to each window on a 1:1 basis and sets a code representing the priority level to each register. Each priority register is constructed such that CPU sets in advance the window number of the priority level through an I/O interface circuit INT₂ on the CPU side thereto. Incidentally, CPU sets the display area of the window in each window management circuit WND₁ ∼ WNDₙ and the display start address and the calculation constants such as the memory width in each address arithmetic unit WAL₁ ∼ WALₙ through the I/O interface circuit INT₂.

Fig. 2 shows an example of the construction of the window display priority designation circuit 14 employing the first method mentioned above, which sets the window number to the registers to which the priority sequence is in advance applied, among the priority setting method described above.

In Fig. 2, symbols PRG₁ ∼ PRGₙ represents the priority registers to which the priority sequence is given. The window number is set in turn from the window having the highest priority into each priority register PRG₁ ∼ PRGₙ. The window number in each priority register PRG₁ ∼ PRGₙ is decoded by the corresponding decoder DEC₁ ∼ DECₙ so that among the output signals of each decoder, only one signal corresponding to the window number is raised to the high level. The output signal of each decoder DEC₁ ∼ DECₙ is used as the control signal/input to the status signal generation logic 16.

On the other hand, a flag FG₁ ∼ FGₙ consisting of a flip-flop is disposed in the window display priority designation circuit 14 in such a manner as to correspond to each window, and is set and reset by the display start signal and display end signal from each window management circuit WND₁ ∼ WNDₙ. When the output of each flag is turned to the low level corresponding to the logic "0" by the display start signal for the corresponding window, each flag keeps this low level until the display end signal is applied thereto. The output signals of these flags FG₁ ∼ FGₙ are supplied as the calculation start signals ST₁ ∼ STₙ to the window address arithmetic units WAL₁ ∼ WALₙ, although not limitative in particular, and while the calculation start signal remains at the low level, calculation of the display address of the corresponding window is continued. Where a plurality of windows overlap with one another, calculation of the predetermined display address is executed for each of these windows.

In the embodiment described above, the output of each flag FG₁ ∼ FGₙ is supplied to the control signal/status signal generation logic 16 together with the output of each decoder DEC₁ ∼ DECₙ and used to determine which address is to be outputted as the display address among the addresses that are calculated by the address arithmetic units WAL₁ ∼ WALₙ. In other words, the window which is being calculated is determined from the output of the flag FG₁ ∼ FGₙ, the window number having the highest priority level is determined from among the information of the priority registers PRG₁ ∼ PRGₙ and the control signal Ci which opens the output gate Gi of the corresponding arithmetic unit is outputted. Moreover, the number of the window to which the outputted display address belongs is selectively outputted and the priority level of the window is outputted, too, on the basis of the decoder output.

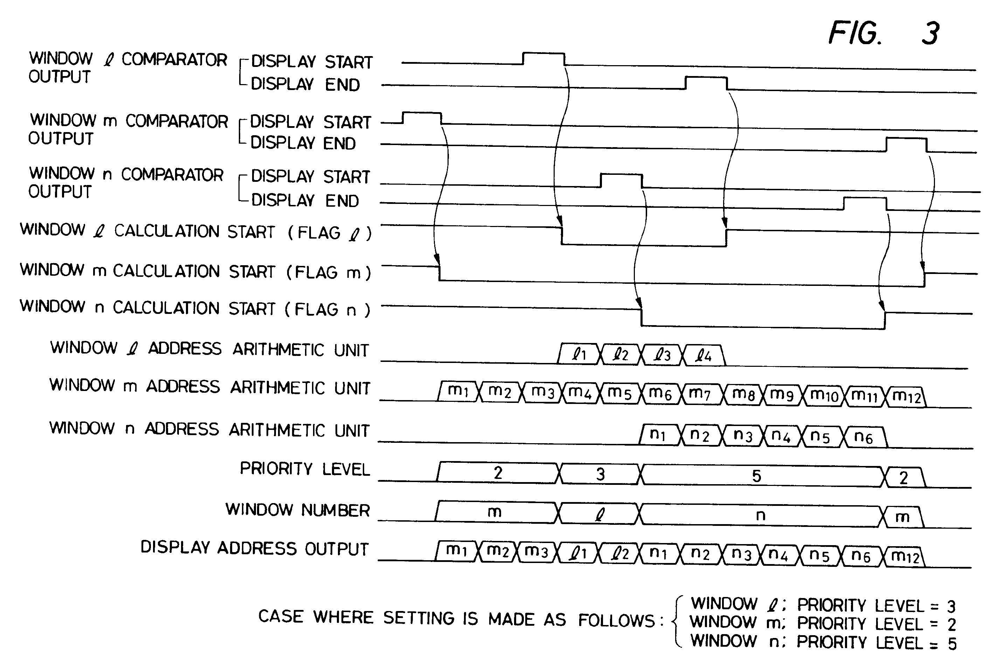

Fig. 3 shows the output state of various control signals and display addresses at the overlap portion when three windows ℓ, m and n are prepared and set to the priority registers having the priority levels "3", "2" and "5", respectively, by way of example (with the proviso that the greater number represents higher priority).

The flag corresponding to each window is set and reset by the output of the comparator inside each window management circuit WND₁ ∼ WNDₙ. While the flag is set and its output signal is at the low level, calculation of the display address is continued in the corresponding address arithmetic unit. When calculation is made simultaneously in a plurality of arithmetic units, that is, when a plurality of windows overlap with one another, the addresses corresponding to the windows having the higher priority level (in the sequence n > ℓ > m in the embodiment) are selected and outputted as the display address.

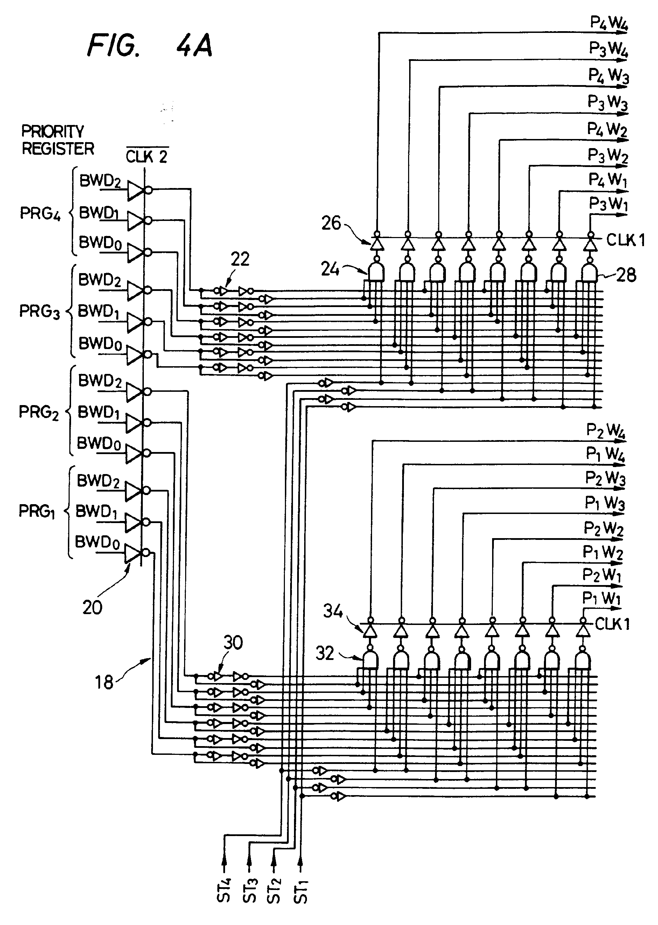

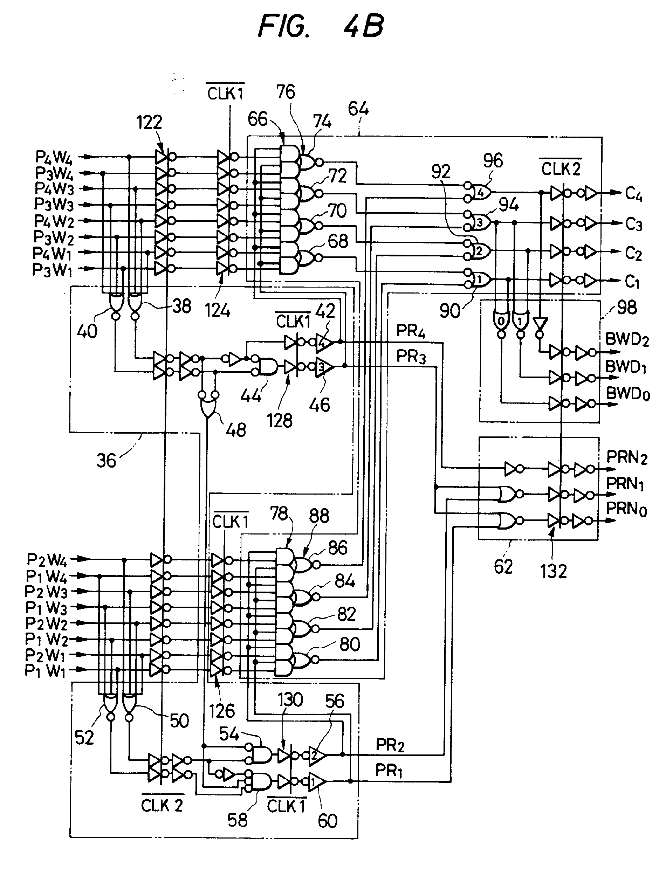

Next, an example of a circuit construction including the decoder DEC₁ ∼ DECₙ and the status signal generation logic 16 will be explained with reference to Figs. 4 A and 4 B.

Although not particularly limitative, the circuits shown in Figs. 4 A and 4 B are applied to a system which display-controls maximum four windows on the display surface and consist of a random logic circuit. In the description based upon Figs. 4 A and 4 B, 3-bit data BWD₀ ∼ BWD₂ supplied from CPU designate the window number, although this is not particularly limitative. In other words, when BWD₀, BWD₁ and BWD₂ are "1", "0" and "0", the state means designation of the window 1 and when they are "0", "1" and "0", the state means designation of the window 2. Furthermore, when they are "1", "1" and "0", the state means designation of the window 3 and when they are "0", "0" and "1", the state means designation of the window 4. The combinations of the bits other than those described above mean that the window display is not effected. These 3-bit data BWD₀, BWD₁ and BWD₂ have the combinations of codes corresponding to the window number and are set to the four priority registers PRG₁ to PRG₄, respectively. Here, the priority sequence is provided to these registers PRG₁ to PRG₄ in advance in the same way as in the aforementioned case, and the priority becomes higher progressively from PRG₁ to PRG₄. Hereinafter, the priority levels provided to these priority registers PRG₁ to PRG₄ will be called the "priority levels 1, 2, 3 and 4", respectively.

In Fig. 4 A, reference numeral 18 represents a decoder unit which obtains the relation between the window for which address calculation is made and the priority level of that window the basis of the set data of the four priority registers PRG₁ ∼ PRG₄ and the calculation start signals ST₁ ∼ ST₄ described above.

In this decoder unit 18, the upper half corresponding to the priority registers PRG₃ and PRG₄ have the construction to decode the window numbers set as the priority level 3 or 4 and to decode also the window number among the window numbers for which address calculation has already been started. The decoded output signals in this upper half construction are eight kinds, i.e. P₃W₁, P₄W₁, P₃W₂, P₄W₂, P₃W₃, P₄W₃, P₃W₄ and P₄W₄. When these decoded output signals PₘWₙ (m = 3, 4; n = 1, 2, 3, 4) are at the high level, the window n is set as the priority level m and the start of address calculation for this window n is designated, though not particularly limitative. Such a decoding logic consists, though not particularly limitative, of a clocked inverter array 20 for outputting the set data of the priority registers PRG₃ and PRG₄ for each bit at fixed timing, an inverter array 22 for converting the bit data supplied from the clocked inverter array 20 to data of complementary levels, a NAND gate array 24 which receives as its four inputs the predetermined three data among the outputs of the inverter array 22 and one predetermined signal among the inversion level signals of the calculation start signals ST₁ to ST₄, and a clocked inverter array 26 for supplying the output of the NAND gate array 24 to the next stage at a predetermined timing. For example, the inversion level signal of the calculation start signal ST₁ corresponding to the window 1, the signal having the same level as the bit BWD₀ set to the respective priority register PRG₃, the inversion level signal of the bit BWD₁ and the inversion level signal of the bit BWD₂ are applied, for example, to the NAND gate circuit 28 generating the decoded output signal P₃W₁. Therefore, when all the four input signals applied to the NAND gate circuit 28 are at the high level, that is, when the window 1 is set to the priority register PRG₃ (BWD₀ = 1, BWD₁ = 0, BWD₂ = 0) and the calculation start signal is given to the window 1 (ST₁ = 0), the output signal of the NAND circuit 28 is at the low level and the decoded output signal P₃W₁ is at the high level as the active level.

The lower half of the decoding unit 18 corresponding to the priority registers PRG₁ and PRG₂ has the construction in order to decode the window numbers set as the priority level 1 or 2 and further to decode the window number among the window numbers for which the start of address calculation is designated. The lower half has the same logic construction as that of the upper half and generates the eight kinds of decoded output signals, i.e., P₁W₁, P₂W₁, P₁W₂, P₂W₂, P₁W₃, P₂W₃, P₁W₄ and P₂W₄. When these decoded output signals PₘWₙ (m = 1, 2, n = 1, 2, 3, 4) are at the high level, the window n as the priority level m is set and the start of address calculation for that window n is instructed. Such a decoding logic consists of a clocked inverter array 20 for outputting the set data of the priority registers PRG₁ and PRG₂ for each bit at a predetermined timing, an inverter array 30 for converting the bit data supplied from the clocked inverter array 20 to data of complementary levels, a NAND gate array 32 including eight NAND gate circuits which receive as its four input the predetermined three data of the outputs of the inverter array 30 and one predetermined inversion level signal among the inversion level signals of the calculation start signals ST₁ to ST₄ described above and a clocked inverter array 34 for supplying the output of the NAND gate array 32 to the next stage at a predetermined timing.

In Fig. 4 B, reference numeral 36 represents a logic unit for generating a priority level instruction signal corresponding to the priority level of the window to be displayed on the basis of the sixteen kinds of the decoded output signals P₃W₁, P₄W₁, P₃W₂ P₄W₂, P₃W₃, P₄W₃, P₃W₄, P₄W₄, P₁W₁, P₂W₁, P₁W₂, P₂W₂, P₁W₃, P₂W₃, P₁W₄ and P₂W₄.

In this logic unit 36, the NOR gate circuit 38 receives the decoded output signals P₄W₁, P₄W₂, P₄W₃ and P₄W₄ described above as its four inputs and outputs a low level signal when any of these input signals is at the high level. In other words, when the priority level 4 is set to any of the windows for which address calculation is to be made, the NOR gate circuit 38 outputs the low level signal. Furthermore, the NOR gate circuit 40 receives the decoded output signals P₃W₁, P₃W₂, P₃W₃ and P₃W₄ as its four inputs and outputs a low level signal when any of these four input signals is at the high level. In other words, this circuit outputs the low level signal when the priority level 3 is set to any of the windows for which address calculation is to be made.

The inverter 42 outputs the inversion level signal of the output signal of the NOR gate circuit 38 as the priority level designation signal PR₄. When the priority level designation signal PR₄ is at the high level, it means that the window to be displayed has the priority level 4. The NOR gate circuit 44 receives the inversion level signal of the output signal of the NOR gate circuit 38 described above and the normal level signal of the output signal of the NOR gate circuit 40 as its two inputs and the inverter 46 outputs the normal level signal of the output signal of the NOR gate circuit 44 as the priority level designation signal PR₃. When the priority level designation signal PR₃ is at the high level, it means that the window to be displayed has the priority level 3. The condition that the output of the NOR gate 44 turns to the high level is that the output of the NOR gate circuit 38 is at the high level and the output of the NOR gate circuit 40 is at the low level. In other words, start of calculation is instructed for any of the windows which are set as the priority level 3 and start of calculation is not instructed for any of the windows set as the priority level 4. Therefore, when start of calculation is instructed for any of the windows set as the priority level 3 and start of calculation is also instructed for any of the windows set as the priority level 4, the priority level designation signal PR₄ is turned to the high level only for the priority level 4 having higher priority and the priority level designation signal PR₃ is turned to the low level.

In the logic unit 36 described above, the NAND gate circuit 48, which receives as its two inputs the normal level signal of the output of the NOR gate circuit 38 and the normal level signal of the NOR gate circuit 40, instructs to select the priority level 3 or the priority level 4 in accordance with the high level output.

In the logic unit 36, the NOR gate circuit 50 receives as its four input the decoded output signals P₂W₁, P₂W₂, P₂W₃ and P₂W₄ and outputs the low level when any of these input signals is at the high level. In other words, this circuit outputs the low level signal when the priority level 2 is set to any of the windows for which address calculation is to be made. The NOR gate circuit 52 receives as its four inputs the decoded output signals P₁W₁, P₁W₂, P₁W₃, and P₁W₄ and outputs the low level signal when any of these input signals is at the high level. In other words, this circuit outputs the low level signal when the priority level 1 is set to any of the windows for which address calculation is to be made. The NOR gate circuit 54 receives as its two input the output signal of the NAND gate circuit 48 and the normal level signal of the output signal of the NOR gate circuit 50, and the inverter 56 outputs the normal level signal of the output signal of the NOR gate circuit 54 as the priority level designation signal PR₂. When the priority level designation signal PR₂ is at the high level, it means that the window to be displayed has the priority level 2.

The NOR gate circuit 58 receives as its three inputs the inversion level signal of the output signal of the NOR gate circuit 50, the normal level signal of the output signal of the NOR gate 52 and the output signal of the NAND gate circuit 48, and the inverter 60 outputs the normal level signal of the output signal of the NOR gate circuit 58 as the priority level designation signal PR₁. When this priority level designation signal PR₁ is at the high level, it means that the window to be displayed has the priority level 1. The condition that the output of the NOR gate 54 turns to the high level is that the output of the NAND gate circuit 48 is at the low level and the output of the NOR gate circuit 50 is at the low level. In other words, start of calculation is instructed for any of the windows which are set as the priority level 2 and is not instructed for any of the windows having the priority level 4 or 3. Therefore, only in such a case, the priority level designation signal PR₂ having lower priority than the priority level 3 or 4 is turned to the high level.

On the other hand, the condition that the output of the NOR gate circuit 58 turns to the high level is that the output of the NAND gate circuit 48 is at the low level, the output of the NOR gate circuit 50 is at the high level and the output of the NOR gate circuit 52 is at the low level. In other words, the condition means that under the state where start of calculation is not instructed for any of the windows of the priority level 4 or 3, start of calculation is instructed for any of the windows set as the priority level 1 and start of calculation is not instructed for any of the windows having the priority level 2. Therefore, the priority level designation signal PR₁ as to the priority level 1 is turned to the high level only when start of calculation is instructed for only any of the windows set as the priority level 1 having the lowest priority.

Although not particularly limitative, the priority level designation signals PR₁, PR₂, PR₃ and PR₄ are converted and outputted to the three-bit priority level data PRN₀, PRN₁, PRN₂ through the decoding unit 62 shown in Fig. 4 B. Here, in accordance with the logic of the decoding unit 62, the state where PRN₀, PRN₁ and PRN₂ are "1", "1" and "0" means the priority level 4, when they are "0", "0" and "1", it means the priority level 3 and when they are "1", "0" and "1", it means the priority level 2. When they are "0", "1" and "1", it means the priority level 1.

In Fig. 4 B, reference numeral 64 represents a decoding unit which generates address output gate control signals C₁ ∼ C₄ on the basis of the output signal of the decoding unit 18 described above and the output signal of the logic unit 36. This decoding unit 64 makes output control of the display address corresponding to the window having the highest priority among the windows for which start of calculation of the window address is instructed.

This decoding unit 64 includes an AND gate array 66 consisting of eight two-input type AND gate circuits and a NOR gate array 76 consisting of NOR gate circuits 68, 70, 72, 74 receiving sequentially as their two inputs the output signals of the AND gate circuits contained in the AND gate array 66. The decoded output signals P₃W₁, P₄W₁, P₃W₂, P₄W₂, P₃W₃, P₄W₃, P₃W₄ and P₄W₄ are supplied to one of the input terminals of each AND gate circuit contained in the AND gate array 66, and the priority level designation signals PR₃ and PR₄ are supplied to the other input terminal. Therefore, the NOR gate circuit 68 is at the low level when the window 1 which is set as the priority level 3 or 4 among the windows for which start of window address calculation is instructed has the highest priority level, and the NOR gate circuit 70 is at the low level when the window 2 which is set as the priority level 3 or 4 among the windows for which start of window address calculation is instructed has the highest priority level. The NOR gate circuit 72 is at the low level when the window 3 set as the priority level 3 or 4 among the windows for which start of window address calculation is instructed has the highest priority level and the NOR gate 74 is at the low level when the window 4 set as the priority level 3 or 4 among the windows for which start of window address calculation is instructed has the highest priority level.

Similarly, the decoding unit 64 described above includes an AND gate array 78 consisting of eight two-input type AND gate circuits and a NOR gate array 88 consisting of NOR gate circuits 80, 82, 84 and 86 receiving sequentially at their two inputs the output signals of the AND gate circuits contained in the AND gate array 78. The decoded output signals P₁W₁, P₂W₁, P₁W₂, P₂W₂, P₁W₃, P₂W₃, P₁W₄ and P₂W₄ are supplied to one of the input terminals of the AND gate circuits contained in the AND gate array 78 and the priority level designation signals PR₁ and PR₂ are supplied to the other input terminals. Therefore, the NOR gate circuit 80 is at the low level when the window 1 set as the priority level 1 or 2 among the windows for which start of window address calculation is instructed has the highest priority level and the NOR gate circuit 82 is at the low level when the window 2 set as the priority level 1 or 2 among the windows for which start of window address calculation is instructed has the highest priority level. The NOR gate circuit 84 is at the low level when the window 3 set as the priority level 1 or 2 among the windows for which start of window address calculation is instructed has the highest priority level, and the NOR gate circuit 86 is at the low level when the window 4 set as the priority level 1 or 2 among the windows for which start of window address calculation is instructed has the highest priority level.

In the decoding unit 64 described above, the NAND gate circuit 90 generates an address output gate control signal C₁ for the window 1 by receiving as its two inputs the outputs of the NOR gate circuits 68 and 80 described above, and the NAND gate circuit 92 generates the address output gate control signal C₂ for the window 2 by receiving as its two inputs the outputs of the NOR gate circuits 70 and 82. The NAND gate circuit 94 generates the address output gate control signal C₃ by receiving as its two inputs the outputs of the NOR gate circuits 72 and 84 and the NAND gate circuit 96 generates the address output gate control signal C₄ for the window 4 by receiving as its two inputs the outputs of the NOR gate circuits 74 and 86.

Here, setting of a plurality of window numbers to the priority registers PRG₁ ∼ PRG₄ is not permitted and the priority level designation signals PR₁, PR₂, PR₃ and PR₄ generated in the logic unit 36 are not set to the high level simultaneously. Therefore, among the outputs of the NOR gate circuits 68, 70, 72, 74, 80, 82, 84 and 86 described above, only one of them is always controlled to be at the low level in connection with the priority level even when start of address calculation is instructed simultaneously for a plurality of windows, so that only the address output gate control signal of the window corresponding to the low level output is controlled to be at the active level such as the high level and outputs the display address for that window.

In Fig. 4 B, reference numeral 98 represents a decoding unit which generates the 3-bit data BWD₀, BWD₁ and BWD₂ described above corresponding to the window number of the display address on the output of the NAND gate circuits 90, 92, 94 and 96. In accordance with the logic of this decoding unit 98, the state when the address output gate control signal C₁ corresponding to the window 1 is at the high level, means the data BWD₀, BWD₁ and BWD₂ are "1", "0" and "0" representing the window 1 and when the address output gate control signal C₂ corresponding to the window 2 is at the high level, the data BWD₀, BWD₁ and BWD₂ are "0", "1" and "0" representing the window 2. When the address output gate control signal C₃ corresponding to the window 3 is at the high level, the data BWD₀ , BWD₁ and BWD₂ are "1", "1" and "0" representing the window 3 and when the address output gate control signal C₄ corresponding to the window 4 is at the high level, the data BWD₀, BWD₁ and BWD₂ are "0", "0" and "1" representing the window 4. When all the address output gate control signals C₁ to C₄ are at the low level, the data BWD₀, BWD₁ and BWD₂ are "0", "0" and "0" not representing the window display.

In the constructions shown in Figs. 4 A and 4 B, various clocked inverter arrays 20, 26, 34, 122, 124, 126, 128, 130 and 132 are disposed in order to define the output timings of the address output gate control signals, the window numbers and the priority levels in connection with the next stage and to prevent racing due to the delay of the gate circuits. These clocked inverter arrays are controlled by clock signals CLK1, CLK2 and C̅L̅K̅1̅, C̅L̅K̅2̅ that overlap with one another and, although not particularly limitative, the change of each clock signal from the low level to the high level is used as the output timing. In other words, when the clock signal CLK2 changes to the high level, the window number data set in each priority register PRG1 ∼ PRG4 is outputted through the clocked inverter array 20 and at the same time, the calculation start designation signal ST1 ∼ ST4 is outputted, too. Then, sixteen kinds of the decoded output signals P₃W₁, P₄W₁, P₃W₂, P₄W₂, P₃W₃, P₄W₃, P₃W₄, P₄W₄, P₁W₁, P₂W₁, P₁W₂, P₂W₂, P₁W₃, P₂W₃, P₁W₄ and P₂W₄ are outputted from the inverter arrays 26 and 34 in response to the change of the clock signal CLK1 to the high level. The signal is outputted from the inverter array 122 in response to the change of the clock signal CLK2 to the high level and then the signals are outputted from the clocked inverter arrays 124, 126, 128 and 130 in response to the change of the clock signal C̅L̅K̅1̅ to the high level. Furthermore, the next window number data and the calculation start signals ST₁ to ST₄ are input in response to the change of the clock signal C̅L̅K̅2̅ to the high level and the address output gate control signal, the window number data and the priority level data are outputted from the clocked inverter array 132 on the basis of the signals that are input in response to the change of the clock signal C̅L̅K̅2̅ of one previous cycle to the high level.

Next, in the construction shown in Figs. 4 A and 4 B, the operation when a plurality of windows overlap will be described. For example, under the state where the priority level 1 is set to the window 3, the priority level 2 is set to the window 4, the priority level 3 is set to the window 1 and the priority level 4 is set to the window 2, if the windows 1, 3 and 4 overlap with one another, three address calculation start signals ST₁, ST₃ and ST₄ are all at the low level. Then, the decoded output signals P₃W₁, P₁W₃ and P₂W₄ are at the high level and the output signals of the three NOR gate circuits 40, 50 and 52 are controlled to the low level. At this time, the logic unit 36 described above controls only the priority level designation signal PR₃ having the highest priority among the priority set to the three windows 1, 3 and 4 to the high level and outputs it so that the decoding unit 62 described above outputs the 3-bit data PRN₀, PRN₁ and PRN₂ through the combination of the levels corresponding to the priority level 3. On the other hand, in the decoding unit 64 to which the high level priority level designation signal PR₃ is supplied from the logic unit 36, the output of only one NOR gate circuit 68 among the NOR gate circuits contained in the NOR gate arrays 76 and 88 is controlled to the low level, so that the address output gate control signal C₁ instructing the output of the display address corresponding to the window 1, to which the highest priority is set among the three windows 1, 3 and 4 having mutually overlap portions, is controlled to the high level. At this time, the decoding unit 98 outputs the 3-bit window number data BWD₀, BWD₁ and BWD₂ through the combination of levels corresponding to the window number 1 of the display address.

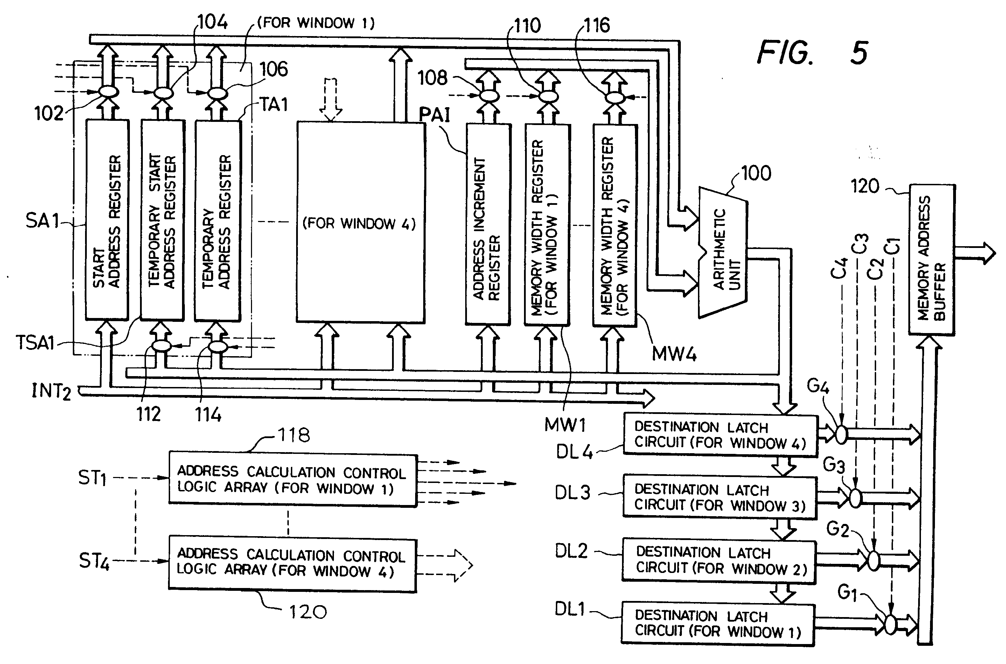

Next, an example of the circuit construction containing the address arithmetic units WAL₁ ∼ WALₙ and output gates G₁ ∼ Gₙ described above will be explained with reference to Fig. 5.

The circuit construction shown in Fig. 5 corresponds to the constructions shown in Figs. 4 A and 4 B and is applied to a system which displays and controls maximum four windows on a display surface. Although the address arithmetic units WAL₁ ∼ WALₙ are shown as different functional blocks in Fig. 1, the construction using one arithmetic unit 100 is shown in Fig. 5.

In Fig. 5, there are shown disposed a start address register SA1 which stores the address data corresponding to the start display address of the window 1 as the display address arithmetic register for the window 1, a temporary start address register TSA1 for storing the start display address in the present raster of the window 1, a temporary address register TA1 for storing the present display address of the window 1, a memory width register MW1 for storing the number of addresses in the horizontal direction in the logic address space of the window 1 and an address increment register PAI for storing the address increment number in the horizontal direction for all the windows. The address increment register PA1 is common to all the windows, and these start address register, temporary start address register, temporary address register and memory width register are disposed for the other windows 2 to 4.

The data supplied from CPU through the I/O interface circuit INT₂ are set initially to the start address registers SA1, ..., the memory width registers MW1, ... and the address increment register PAI. The content of the other temporary start address registers TSA1, ... and the temporary address registers TA1, ... is updated sequentially in accordance with the result of calculation by the arithmetic unit 100.

The output terminals of the start address register SA1, temporary start address register TSA1 and temporary address register TA1 are coupled to one of the input terminals of the arithmetic unit 100 through the gates 102, 104 and 106, and the output terminals of the memory width register MW1 and address increment register PAI are connected to the other input terminal of the arithmetic unit 100 through the gates 110 and 108. The output terminal of the arithmetic unit 100 is coupled to the destination latch circuits DL4, DL3, DL2, DL1 which shift and latch the input data, and to the input terminals of the temporary start address register TSA1 and temporary address register TA1 through the gates 112 and 114. Each display address calculation register for the windows 2 ∼ 4 has the same relation of connection as described above. Incidentally, reference numeral 116 represents the gate for the memory width register MW4 for the window 4.

In Fig. 5, reference numeral 118 represents a logic for the address calculation control of the window 1. This logic generates the control signals for open/close control of the gates 102, 104, 106, 108, 110, 112, 114 at predetermined timings by the calculation start designation signal ST1 described above. Similar address calculation control logic arrays are disposed for the windows 2 to 4, too. Incidentally. reference numeral 120 in Fig. 5 presents the address calculation control logic array for the window 4.

Here, the calculation sequence of the display address will be explained. The display address for the window 1 is calculated, for example, in the following way. When the start of calculation of the display address is instructed to the address calculation control logic array 118 by the calculation designation signal ST₁, the gate 102 is first opened and the leading address data of the window 1 stored in the start address register SA1 is used as the display address through the arithmetic unit 100 which is under the non-operation state. At this time, the leading address data outputted through the arithmetic unit 100 is stored in the temporary start address register TSA1 and the temporary address register TA1 through the gates 112 and 114 that are controlled to the ON state. At the next calculation timing, the stored data of the temporary address register TA1and the print address increment register PAI are added by the arithmetic unit 100 and is used as the display address. The result of calculation at this time is stored in the temporary address register TA1.

Such a calculation sequence is continued so long as the display position is at the same raster in the window 1. Next, when the horizontal position is changed to the next raster, the address data stored in the temporary start address register TSA1 and the stored data of the memory width register MW1 are added by the arithmetic unit 100 and the addition result data is used as the leading display address of the raster. This address data is stored in the temporary start address register TSA1 and the temporary address register TA1 through the gates 112 and 114 that are controlled to the ON state. At the next timing, the stored data of the temporary address register TA1 and the stored data of the address increment register PA1 are added by the arithmetic unit 100 and the result is used as the next display address. This display address data is stored in the temporary address register TA1. Thereafter, each display address of the window 1 is sequentially calculated in the same way as described above. Such a calculation sequence is continued so long as the display position is in the same raster in the window 1. Next, when the horizontal display position is changed to the next raster, the address data stored in the temporary start address register TSA1 and the stored data of the memory width register MW1 are added by the arithmetic unit 100 and the addition result data is used as the leading display address in that raster. This address data is stored in the temporary start address register TSA1 and the temporary address register TA1 through the gates 112 and 114 that are controlled to the ON state.

At the next display timing, the stored data of the temporary address register TA1 and the stored data of the address increment register PAI are added by the arithmetic unit 100 and the addition result data is used as the next display address. This display address data is stored in the temporary address register TA1. Thereafter, each display address of the window 1 is sequentially calculated in the same way as described above.

Although not particularly limitative, the construction shown in Fig. 5 can calculate sequentially and time-divisionally the display addresses of from window 1 to window 4 in one memory cycle of a frame buffer, not shown. Therefore, the output data of the arithmetic unit 100 is sequentially shifted in one memory cycle and latched from the destination latch circuit DL1 to DL4. At this time, the display address is latched by the destination latch circuit corresponding to the window for which calculation of the display address is instructed by the calculation start designation signal ST₁ ∼ ST₄. In other words, the display addresses for maximum four windows are latched every one memory cycle.

The address data latched by the destination latch circuit DL1 ∼ DL4 every one memory cycle is supplied to the memory address buffer 120 through one of the output gates G₁ to G₄ that are controlled on the basis of the address output gate control signals C₁ to C₄ and the address data is outputted as the display address to the frame buffer not shown.

The embodiment described above indicates that the invention provides the following effects.
(1) The embodiment disposes the window management circuits having the registers for setting the display start position and end position on the display surface and the address comparators in the same number as the number of windows that are to be controlled under their own management and the address calculation circuits in order to make address calculation for each window. The embodiment includes also the window control circuit (window display priority designation circuit) including the register for setting the priority of each window, judging the priority on the basis of the content of this register and generating the control signal for outputting the address corresponding to the window having the highest priority among the addresses that are calculated by the addresses calculation circuit. Therefore, the present invention provides the effect that the display position of the window, its size and display content and the display priority sequence at the overlap portion can be changed arbitrarily by merely changing the set content of the register.
(2) When multi-window display control is made, the present invention does not need the processing of transferring the data of each window area by the bit block transfer system and rewriting the base picture area, but can supply directly the addresses of a predetermined window data to, for example, a frame buffer in accordance with the display priority sequence set in advance programmably.
(3) Due to the effects described above, the present invention can improve freedom of the display surface control and moreover can make multi-window control at a higher speed.

Although the present invention has thus been described definitely with reference to a preferred embodiment thereof, it is not particularly limited thereto but can of course be changed or modified in various manners without departing from the scope thereof. For example, in the embodiment given above, only the window display is explained without mentioning at all the display of the background, but it is possible to make desired window display control by regarding the display surface as a whole as one window, giving the lowest priority level to the background to regard it as the background surface and displaying the window which is smaller than and has higher priority than the former on the background surface.

In place of the priority registers PRG₁ to PRGₙ, window number registers for setting the display priority level in the sequence of the window number can be employed, i.e. according to the second priority setting method mentioned previously.

In the embodiment given above, the display controller can output the priority level and the window number but these status signals need not always be outputted to the outside.

In the embodiment given above, further, address calculation is made for each of the windows which are judged as containing the display position in connection with the output of the display address of the window which is judged as having high priority when making the multi-window display control, and the result of calculation having the highest priority is selectively outputted to the frame buffer through the output gate. However, it may be possible, too, to selectively execute the address calculation of the data corresponding to the window which is judged as having the highest priority and to supply the result of calculation as the display address to the frame buffer.

Although the description given above deals primarily with the application of the present apparatus to the display controller as the field of utilization thereof, the present invention is not particularly limited thereto but can be utilized, too, for a control apparatus for reading and writing the data from and to a memory in a laser beam printer, for example.

## Claims

1. A display control apparatus comprising
means (WND₁ to WNDₙ, WAL₁ to WALₙ) for programmably defining a plurality (n) of windows on a display area, including a plurality of means (WAL₁ to WALₙ) each for generating memory addresses associated with display data for one of said plurality of windows;
a plurality of registers (PRG₁ to PRGₙ) each for programmably associating a display priority with one of said plurality of windows;
means (WND₁ to WNDₙ, 10, 12) for determining which ones of said plurality of windows include a currently designated position of said display area; and
means (DEC₁ to DECₙ, 16, G₁ to Gₙ) for selecting the output of the memory address generating means (WAL₁ to WALₙ) for the one of said determined windows which has the highest display priority.

2. A display control apparatus according to claim 1, wherein each of said memory address generating means (WAL₁ to WALₙ) programmably associates a predetermined memory width with its window according to the number of addresses required for storing data representing one horizontal line of the window.

3. A display control apparatus according to claim 1 or claim 2, wherein the selecting means comprises means (DEC₁ to DECₙ, 16) for decoding signals supplied from the priority setting registers (PRG₁ to PRGₙ) and from the window determining means (WND₁ to WNDₙ), whereby the decoding means (DEC₁ to DECₙ, 16) selects the window having the highest priority among those windows designated by the window determining means (WND₁ to WNDₙ).

4. A display control apparatus according to any one of claims 1 to 3, wherein the window defining means (WAL₁ to WALₙ) includes registers (SA1) for setting display start and end positions of each window on the display area.

5. A display control apparatus according to claim 4, wherein the window determining means includes counting means (10, 12) for representing said currently designated position of the display area, and, for each window, comparison means for comparing the count value of said counting means with set values of the start and end position registers (SA1) for the window, each comparison means producing an output signal representing its window when the currently designated position lies within its window.

6. A display control apparatus according to any one of claims 1 to 5, wherein the window determining means (WND₁ to WNDₙ, 10, 12) provides respective signals (ST₁ to STₙ), instructing address calculation, to the ones of the address generating means (WAL₁ to WALₙ) which correspond to the windows determined to include said currently designated position, and wherein the selecting means (DEC₁ to DECₙ, 16, G₁ to Gₙ) provides-a signal (C₁ to Cₙ) for selecting the output of the address generating means (WAL₁ to WALₙ) corresponding to the window having the highest display priority.

7. A display control apparatus according to any one of claims 1 to 6, wherein the priority setting registers (PRG₁ to PRGₙ) have priorities determined in advance, and respective identification data for the windows are programmably assignable to the priority setting registers.

8. A display control apparatus according to any one of claims 1 to 6, wherein each of the priority setting registers is dedicated to one of the windows, and respective priorities for the windows are programmably assignable to the priority setting registers.

9. A display control apparatus according to any one of the preceding claims, wherein the window defining means (WND₁ to WNDₙ) and the priority setting registers (PRG₁ to PRGₙ) receive programming data from a central processing unit.

10. A display control apparatus according to claim 2 or any one of the claims appendent thereto, wherein each of the memory address generating means (WAL₁ to WALₙ) includes a register (MW1, MW4) for setting said memory width for its window.

11. A display control apparatus according to claim 10, wherein the memory width setting registers (MW1, MW4) receive programming data from a central processing unit.

12. A display control apparatus according to claim 2 or any one of the claims appendent thereto, further comprising a frame buffer which receives the output of the memory address generating means (WAL₁ to WALₙ) selected by said selecting means, and wherein the plurality of memory address generating means (WAL₁ to WALₙ) programmably set the predetermined memory width for each of said windows as a memory width within the frame buffer.

## Patentansprüche

1. Anzeigesteuergerät, umfassend
eine Einrichtung (WND₁ bis WNDₙ, WAL₁ bis WALₙ) zum programmierbaren Definieren mehrerer (n) Fenster in einem Anzeigebereich, einschließlich mehreren Einrichtungen (WAL₁ bis WALₙ) zum jeweiligen Erzeugen von Speicheradressen, die Anzeigedaten für jeweils eines der mehreren Fenster zugeordnet sind,
mehrere Register (PRG₁ bis PRGₙ), deren jedes einem der mehreren Fenster eine Anzeigepriorität programmierbar zuordnet,
eine Einrichtung (WND₁ bis WNDₙ, 10, 12) zur Bestimmung, welches der mehreren Fenster eine gerade bezeichnete Position in dem Anzeigebereich enthält, und
eine Einrichtung (DEC₁ bis DECₙ, 16, G₁ bis Gₙ) zur Auswahl des Ausgangs der Speicheradressen-Erzeugungseinrichtung (WAL₁ bis WALₙ₎ für dasjenige bestimmte Fenster, das die höchste Anzeigepriorität hat.

2. Anzeigesteuergerät nach Anspruch 1, wobei jede der Speicheradressen-Erzeugungseinrichtungen (WAL₁ bis WALₙ) programmierbar jedem Fenster eine bestimmte Speicherbreite entsprechend der Anzahl von Adressen zuordnet, die zum Speichern von eine horizontale Linie des Fenster darstellenden Daten erforderlich sind.

3. Anzeigesteuergerät nach Anspruch 1 oder 2, wobei die Auswähleinrichtung eine Einrichtung (DEC₁ bis DECₙ, 16) zum Decodieren von Signalen aus den Prioritäts-Einstellregistern (PRG₁ bis PRGₙ) und aus der Fenster-Bestimmungseinrichtung (WND₁ bis WNDₙ) aufweist, wobei die Decodiereinrichtung (DEC₁ bis DECₙ, 16) unter den von der Fenster-Bestimmungseinrichtung (WND₁ bis WNDₙ) bestimmten Fenstern dasjenige mit der höchsten Priorität auswählt.

4. Anzeigesteuereinrichtung nach einem der Ansprüche 1 bis 3, wobei die Fenster-Definiereinrichtung (WAL₁ bis WALₙ) Register (SA1) zur Einstellung von Anfangs- und End-Anzeigepositionen jedes Fensters in dem Anzeigebereich aufweist.

5. Anzeigesteuergerät nach Anspruch 4, wobei die Fenster-Bestimmungseinrichtung eine Zähleinrichtung (10, 12) zur Angabe der besagten, gerade bezeichneten Position in dem Anzeigebereich sowie für jedes Fenster eine Vergleichereinrichtung umfaßt, die den Zählwert der Zähleinrichtung mit eingestellten Werten der Anfangs- und Endpositionsregister (SA1) für das Fenster vergleicht und ein ihr Fenster angebendes Ausgangssignal erzeugt, wenn die gerade bezeichnete Position innerhalb ihres Fensters liegt.

6. Anzeigesteuergerät nach einem der Ansprüche 1 bis 5, wobei die Fenster-Bestimmungseinrichtung (WND₁ bis WNDₙ, 10, 12) jeweils Adreßberechnungs-Befehlssignale (ST₁ bis STₙ) an diejenigen der Adressen-Erzeugungseinrichtungen (WAL₁ bis WALₙ) liefert, die den Fenstern entsprechen, die als die gerade bezeichnete Position enthaltend bestimmt worden sind, und wobei die Ansteuereinrichtung (DEC₁ bis DECₙ, 16, G₁ bis Gₙ) ein Signal (C₁ bis Cₙ) zur Ansteuerung des Ausgangs der Adressen-Erzeugungseinrichtung (WAL₁ bis WALₙ) entsprechend dem Fenster mit der höchsten Anzeigepriorität liefert.

7. Anzeigesteuergerät nach einem der Ansprüche 1 bis 6, wobei die Prioritäts-Einstellregister (PRG₁ bis PRGₙ) vorher bestimmte Prioritäten enthalten und wobei jeweilige Kenndaten für die Fenster den Prioritäts-Einstellregistern programmierbar zuzuordnen sind.

8. Anzeigesteuergerät nach einem der Ansprüche 1 bis 6, wobei jedes der Prioritäts-Einstellregister einem der Fenster zugeteilt ist und jeweilige Prioritäten für die Fenster den Prioritäts-Einstellregistern programmierbar zuzuordnen sind.

9. Anzeigesteuergerät nach einem der vorhergehenden Ansprüche, wobei die Fenster-Definiereinrichtung (WND₁ bis WNDₙ) und die Prioritäts-Einstellregister (PRG₁ bis PRGₙ) Programmierdaten von einer Zentralverarbeitungseinheit erhalten.

10. Anzeigesteuergerät nach Anspruch 2 oder einem der auf ihn rückbezogenen Ansprüche, wobei jede Speicheradressen-Erzeugungseinrichtung (WAL₁ bis WALₙ) ein Register (MW1, MW4) zur Einstellung der Speicherbreite für ihr Fenster enthält.

11. Anzeigesteuergerät nach Anspruch 10, wobei die Speicherbreiten-Einstellregister (MW1, MW4) Programmierdaten von einer Zentralverarbeitungseinheit erhalten.

12. Anzeige-Steuergerät nach Anspruch 2 oder einem der auf ihn rückbezogenen Ansprüche, mit ferner einem Rahmenpuffer zur Aufnahme des von der Auswahleinrichtung ausgewählten Ausgangs der Speicheradressen-Erzeugungseinrichtung (WAL₁ bis WALₙ), wobei die mehreren Speicheradressen-Erzeugungseinrichtungen (WAL₁ bis WALₙ) die vorgegebene Speicherbreite für jedes der Fenster als Speicherbreite innerhalb des Rahmenpuffers programmierbar einstellen.

## Revendications

1. Dispositif de commande d'affichage comprenant
des moyens (WND₁ à WNDₙ, WAL₁ à WALₙ) pour définir d'une manière programmable une pluralité (n) de fenêtres dans une zone d'affichage, incluant une pluralité de moyens (WAL₁ à WALₙ), dont chacun sert à produire des adresses de mémoire associées à des données d'affichage pour l'une de ladite pluralité de fenêtres;
une pluralité de registres (PRG₁ à PRGₙ) servant chacun à associer d'une manière programmable une priorité d'affichage à l'une de ladite pluralité de fenêtres;
des moyens (WND₁ à WNDₙ, 10, 12) pour déterminer quelles fenêtres faisant partie de ladite pluralité de fenêtres incluent une position actuellement désignée de ladite surface d'affichage; et
des moyens (DEC₁ à DECₙ, 16, G₁ à Gₙ) pour sélectionner la sortie des moyens de production d'adresses de mémoire (WAL₁ à WALₙ) pour l'une desdites fenêtres prédéterminées, qui possède la priorité d'affichage la plus élevée.

2. Dispositif de commande d'affichage selon la revendication 1, dans lequel chacun desdits moyens de production d'adresses de mémoire (WAL₁ à WALₙ) associe d'une manière programmable une largeur de mémoire prédéterminée à sa fenêtre conformément au nombre d'adresses nécessaires pour mémoriser des données représentant une ligne horizontale de la fenêtre.

3. Dispositif de commande d'affichage selon la revendication 1 ou 2, dans lequel les moyens de sélection comprennent des moyens (DEC₁ à DECₙ, 16) pour décoder des signaux envoyés par les registres (PRG₁ à PRGₙ) d'affectation de priorités et à partir des moyens de détermination de fenêtres (WND₁ à WNDₙ), les moyens de décodage (DEC₁ à DECₙ, 16) sélectionnant la fenêtre possédant la priorité maximale parmi les fenêtres désignées par les moyens de détermination de fenêtres (WND₁ à WNDₙ).

4. Dispositif de commande d'affichage selon l'une quelconque des revendications 1 à 3, dans lequel les moyens de définition des fenêtres (WAL₁ à WALₙ) comprennent des registres (SA1) pour régler des positions de début et de fin d'affichage de chaque fenêtre dans la zone d'affichage.

5. Dispositif de commande d'affichage selon la revendication 4, dans lequel les moyens de détermination de fenêtres comprennent des moyens de comptage (10,12) pour représenter ladite position actuellement désignée de la zone d'affichage et, pour chaque fenêtre, des moyens comparateurs pour comparer la valeur de comptage desdits moyens de comptage à des valeurs de consigne des registres (SA1) des positions de début et de fin pour la fenêtre, chaque moyen comparateur produisant un signal de sortie représentant sa fenêtre lorsque la position actuellement désignée est située à l'intérieur de sa fenêtre.

6. Dispositif de commande d'affichage selon l'une quelconque des revendications 1 à 5, dans lequel les moyens (WND₁ à WNDₙ, 10, 12) de détermination de fenêtres délivrent des signaux respectifs (ST₁ à STₙ) commandant un calcul d'adresses, à ceux des moyens de production d'adresses (WAL₁ à WALₙ), qui correspondent aux fenêtres déterminées comme contenant ladite position actuellement désignée, et dans lequel les moyens de sélection (DEC₁ à DECₙ, 16, G₁ à Gₙ) délivrent un signal (C₁ à Cₙ) pour sélectionner la sortie des moyens de production d'adresses (WAL₁ à WALₙ) correspondant à la fenêtre qui possède la priorité d'affichage maximale.

7. Dispositif de commande d'affichage selon l'une quelconque des revendications 1 à 6, dans lequel les registres d'affectation de priorités (PRG₁ à PRGₙ) possèdent des priorités déterminées par avance, et des données respectives d'identification pour les fenêtres peuvent être affectées d'une manière programmable aux registres d'affectation de priorités.

8. Dispositif de commande d'affichage selon l'une quelconque des revendications 1 à 6, dans lequel chacun des registres d'affectation de priorité est affecté à l'une des fenêtres, et des priorités respectives pour les fenêtres peuvent être affectées de façon programmable aux registres d'affectation de priorités.

9. Dispositif de commande d'affichage selon l'une quelconque des revendications précédentes, dans lequel les moyens de définition de fenêtres (WND₁ à WNDₙ) et les registres d'affectation de priorités (PRG₁ à PRGₙ) reçoivent des données de programmation de la part d'une unité centrale de traitement.

10. Dispositif de commande d'affichage selon la revendication 2 ou l'une quelconque des revendications qui en dépendent, dans lequel chacun des moyens de production d'adresses de mémoire (WAL₁ à WALₙ) comprend un registre (MW1,MW4) pour le réglage de ladite largeur de mémoire pour sa fenêtre.

11. Dispositif de commande d'affichage selon la revendication 10, dans lequel des registres (MW1, MW4) de réglage de largeurs de mémoire reçoivent des données de programmation de la part d'une unité centrale de traitement.

12. Dispositif de commande d'affichage selon la revendication 2 ou l'une quelconque des revendications qui en dépendent, comportant en outre un tampon de blocs, qui reçoit le signal de sortie des moyens de production d'adresses de mémoire (WAL₁ à WALₙ) sélectionnés par lesdits moyens de sélection, et dans lequel la pluralité de moyens de production d'adresses de mémoire (WAL₁ à WALₙ) règlent d'une manière programmable la largeur de mémoire prédéterminée pour chacune desdites fenêtres en tant que largeur de mémoire dans le tampon de blocs.
